# EUROPEAN PATENT SPECIFICATION

(11) **EP 4 609 080 B1**
(45) Date of publication and mention of the grant of the patent: **11.11.2026**
(21) Application number: 22967375.1
(22) Date of filing: 30.11.2022
(51) Int. Cl.: F16C 32/00

(54) **RADIAL SPEED CONTROL APPARATUS**
RADIAL-DREHZAHLREGELEINRICHTUNG
APPAREIL DE COMMANDE DE VITESSE RADIALE

(43) Date of publication of application: 03.09.2025
(73) Proprietor: Günaydin, Ramazan, Yunusemre Manisa (TR)
(72) Inventor: Günaydin, Ramazan, Yunusemre Manisa (TR)
(74) Representative: Yamankaradeniz, Kemal
(86) International application number: PCT/TR2022/051382
(87) International publication number: WO 2024/117995

(56) References cited:
- CN-A- 108 506 440
- CN-A- 114 688 160
- JP-A- S52 113 449
- US-A1- 2015 232 174
- US-A1- 2022 034 362
- US-B1- 7 424 360
- US-B2- 9 551 386

## Description

### Technical Field

The invention relates to a radial speed control apparatus that allows limiting the radial speed without the need for external control and maintaining the speed value and keeping it constant when it reaches a limit value.

In particular, the invention relates to a radial speed control apparatus which ensures that the current speed is kept constant if the radial speed reaches a limit value and that the radial speed is prevented from increasing uncontrollably, without the need for an external control element and braking mechanism to maintain the radial speed value in the bearing structures.

### State of the Art

Bearings are usually used in tasks such as providing bearing for moving shafts on fixed elements, ensuring that circular parts rotating in different directions relative to each other perform the rotational movement with the least friction possible, reducing power consumption and achieving rotational movement at high speeds. Standard bearings consist of a series of rollers and balls placed between an inner and outer ring positioned inside each other. In the present applications, bearings are designed to reduce the loss of energy due to friction and to increase the radial speed as much as possible. Additional control or braking systems are used to reduce or limit the radial speed that increases with the reduction of friction. These speed control or braking systems, which are externally connected to the bearing, cause the general structure to become cumbersome, increase its size and weight values, raise the production and maintenance costs and cause loss of energy.

A bearing structure that increases the strength of the retaining and separating parts of the bearings and the overall durability of the bearing is described in a patent document numbered US1665448A in the known state of the technique. In the said bearing structure, the retaining strips comprising the inward and outward curved ends are fixed over the separator positioned between the balls, unlike the standard bearings which are formed by combining two metal strips with a metal fastener passed between the balls. In this way, it is ensured that the metal strips form a bearing by wrapping them in suitably for the shape of the balls and that the contact between the balls and the separator and the holder is reduced. By reducing the contact, the frictional effect of the balls is also reduced, this in turn reduces both the wear of the holder and separator and increases the radial speed. In the document there is no mention of a solution to keep the current speed constant if the radial speed reaches a limit value or to prevent the radial speed of the bearing from increasing uncontrollably.

US 2022 034362 A1 discloses another radial speed control apparatus that uses brake pads engaging a static braking surface when a centrifugal force and a spring force reach equilibrium as soon as a specific speed is reached.

Consequently, there is a need to develop a radial speed control apparatus which ensures that the current speed is maintained and kept constant when the radial speed reaches a limit value and that the radial speed is prevented from increasing uncontrollably or continuously, without the need for an external control element and braking mechanism to maintain the radial speed value in bearings and similar structures.

### Aim of the Invention

The present invention relates to a radial speed control apparatus that meets the requirements mentioned above, eliminates possible disadvantages and provides some additional advantages.

The main aim of the radial speed control apparatus, which is the subject of the invention, is to provide a radial speed control apparatus that ensures that the current speed value is maintained and kept constant when the radial speed reaches a first value.

Another aim of the invention is to provide a practical and effective radial speed control apparatus that does not require an external control and / or braking system to maintain or limit the radial speed value.

Yet another aim of the invention is to provide a safe radial velocity control apparatus that prevents the radial velocity from increasing uncontrollably or continuously.

Still another aim of the invention is to provide a compact radial speed control apparatus that eliminates the need for a braking mechanism and prevents the overall structure from becoming bulky and increasing in size and weight values.

Another aim of the invention is to provide an efficient radial speed control apparatus that simplifies the structure, reduces the production and maintenance costs and energy loss.

In order to achieve the aims listed above in the most general form, the radial speed control apparatus that does not require an external control and / or braking system to maintain or limit the radial speed achieved by rotational movement and that ensures that the radial velocity value is maintained and kept constant and that two different elements/ parts can be connected so that they can freely rotate around a first axis comprises at least one first body element which includes at least one chamber that provides for the supporting of theelements belonging to the apparatus; at least one slot that helps limit the radial speed by counteracting the radial velocity; at least one second body element that provides for the supporting of the apparatus elements attached to it; at least one clutch element including at least two clutch arms that allows the elements of the apparatus positioned between the clutch arms to restrict the travel distance during the rotational movement and / or to apply force in the direction opposite to the direction of movement; at least one first braking element that increases the distance between the clutch arms, increases the value of the force component in the direction opposite to the direction of rotation by moving away and initiates the braking effect, prevents increasing of the radial speed by engaging in the slot and keeps it constant at the first speed value and reduces the braking effect by moving closer to the center of the first body element.

The structural and characteristic features of the invention and all its advantages will be understood more clearly by means of the figures presented below and the detailed description written by reference to these figures. For this reason, the evaluation should be made by considering these figures and the detailed description.

### Drawings to Help Understand the Invention

In order to best understand the configuration and advantages of the present invention, it should be evaluated together with the figures described below.

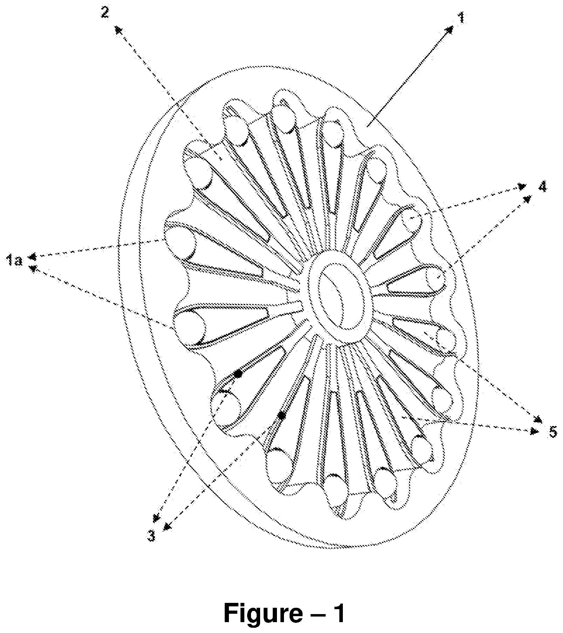

Figure 1 is a perspective view of the radial speed control apparatus, which is the subject of the invention.

### Part References

- 1.: First body element
- 1a.: Slot
- 2.: Second body element
- 3.: Clutch element
- 4.: First braking element
- 5.: Second braking element

### Detailed Description of the Invention

In this detailed description, the preferred configurations of the radial speed control apparatus, which is the subject of the invention, are explained only for a better understanding of the subject and without causing any limiting effect.

The radial speed control apparatus, illustrated in in Figure 1 in example view, developed by the present invention, preferably in the form of a bearing, that does not require an external control and / or braking system to maintain or limit the radial speed achieved by rotational motion, which ensures that the speed value is maintained and constant when the radial speed reaches a first speed value and that two different elements/parts are connected to each other in such a way that they can freely rotate around a first axis, comprises at least one first body element (1) that extends on the plane perpendicular to the first axis, which is suitable for the placement of the elements of the apparatus in it, which contains at least one chamber that is preferably in circular form, which is suitable for connecting the elements of the apparatus and rotating around the first axis, which supports the elements of the apparatus, which is preferably in a circular form having a first diameter value and which is preferably made of metal material; at least one slot (1a) made of metal material, preferably in the form of a semicircular or "U", which extends from the far edge of the chamber from its center, on the plane perpendicular to the first axis, and so that it extends away from the center of the first body element (1), suitable for the placement of a ball-like element in it, which helps to limit the radial velocity by conteracting the radial velocity; at least one second body element (2), which is located on the first body element (1) so that it is suitable for freely rotating around the first axis, which provides support for the apparatus elements connected to it, preferably in circular form having a second diameter value less than the first diameter value, preferably made of metal material; at least one clutch element(3), preferably in the form of tweezers, preferably made of metal material which extends in a "V" shape in connection with the second body element (2) with an increase in the distance between them towards the slot (1a) and which includes at least two clutch arms whose ends are close to the slot (1a) curved so that they come close to each other, the elements of the apparatus positioned between the clutch arms are restricted during the rotational movement and / or force is applied in the opposite direction to the direction of movement; at least one first braking element (4), preferably of spherical form and / or ball structure, preferably made of metal material that acts to increase the distance between the clutch arms by moving away from the center of the second body element (2) in case the radial speed increases, to increase the value of the force component in the opposite direction to the direction of rotation by moving away from the center with the effect of centripetal/centrifugal force and to start the braking effect, to prevent the increasing of radial speed by engaging in the slot (1a) in case the radial speed reaches the first speed value and which ensures that the radial speed is kept constant and that the braking effect is reduced by moving closer to the center of the second body element (2) with the decreasing of the radial speed.

In an exemplary embodiment of the radial speed control apparatus developed with the current invention, the first body element (1) and / or the second body element (2) rotate around the first axis, so that the first braking element (4), which is located between the clutch arms, moves away from the center of the apparatus. In the meantime, by means of the first braking element (4), it is ensured that the distance between the clutch levers is increased, the value of the force component in the opposite direction to the direction of rotation is increased by moving away from the center with the effect of centripetal/centrifugal force and the braking effect is initiated. At the same time, by means of the structure of the clutch element (3), which extends in a "V" shape and curves towards each other, a force is applied in the opposite direction to the direction of the advance of the first braking element (4), which is moving from the center to the outside, and the sudden movement of the first braking element (4) is prevented. When the radial velocity generated by the rotational movement of the apparatus reaches the first speed value, the first braking element (4) is placed in the slot (1a) and thus the force value in the opposite direction to the radial speed direction increases and the braking effect applied on the apparatus is maximized. Thus, it is ensured that the radial speed is prevented from increasing and kept constant at the first speed value. By reducing the radial speed, the first braking element (4) moves closer to the center and the braking effect is reduced. In the meantime, by means of the clutch element (3), a force is applied in the opposite direction to the direction of the first braking element (4), which is moving towards the center, and the sudden movement of the first braking element (4) is prevented. This ensures that the radial speed is balanced without the need for any external speed control system and prevents it from exceeding the first speed value.

**In** a preferred emobodimeny of the invention, the said radial speed control apparatus comprises at least one second braking element (5), preferably made of metal material, the said second braking element is positioned between the said clutch arms so that the said second body element (2) is located close to the center, and in the event of an increase in radial speed, it helps to move the said first braking element (4) away from the center of the said second body element (2), it helps to increase the value of the force component in the direction opposite to the direction of rotation by moving away from the center by the effect of centripetal/centrifugal force and to initiate the braking effect; it also helps to place the mentioned first braking element (4) in the mentioned slot (1a) when the radial speed reaches the mentioned first speed value, and to keep the radial speed constant at the mentioned first speed value by preventing the radial speed from increasing; the said second body element (2) has a configuration such that with the decreasing of radial speed, it moves closer to the center to reduce the braking effect, preferably between the said clutch arms, preferably to grip the said first braking element (4).

By means of to the radial speed control apparatus developed with the present invention, it is made possible to maintain the current speed and keep it constant in case the radial speed reaches a limit value, without the need for an external control element and braking mechanism to maintain the radial speed value in bearing-like structures. **In** addition, the radial speed is prevented to increase uncontrollably or continuously, resulting in an efficient, compact and safe radial speed control apparatus.

## Claims

1. A radial speed control apparatus that does not require an external control and / or braking system to maintain or limit the radial speed achieved by rotational motion, which ensures that the speed value is maintained and constant when the radial speed reaches a first speed value and that two different elements/parts are connected to each other in such a way that they can freely rotate around a first axis **characterized by** comprising;
- at least one first body element (1) that extends on the plane perpendicular to the first axis, which is suitable for the placement of the elements of the apparatus in it, which contains at least one chamber, which is suitable for connecting the elements of the apparatus and rotating around the first axis, which supports the elements of the apparatus;
- at least one slot (1a) which extends from the far edge of the said chamber from its center, on the plane perpendicular to the first axis, and so that it extends away from the center of the first body element (1), suitable for the placement of a ball-like element in it, which helps to limit the radial velocity by counteracting the radial velocity;
- at least one second body element (2), which is located on the first body element (1) so that it is suitable for freely rotating around the first axis, which provides support for the apparatus elements connected to it;
- at least one clutch element (3), which extends in a "V" shape in connection with the second body element (2) with an increase in the distance between them towards the slot (1a) and which includes at least two clutch arms whose ends are close to the slot (1a) curved so that they come close to each other, the elements of the apparatus positioned between the clutch arms are restricted during the rotational movement and / or force is applied in the opposite direction to the direction of movement;
- at least one first braking element (4) that acts to increase the distance between the clutch arms by moving away from the center of the second body element (2) in case the radial speed increases, to increase the value of the force component in the opposite direction to the direction of rotation by moving away from the center with the effect of centripetal/centrifugal force and to start the braking effect, to prevent the increasing of radial speed by engaging in the slot (1a) in case the radial speed reaches the first speed value and which ensures that the radial speed is kept constant and that the braking effect is reduced by moving closer to the center of the second body element (2) with the decreasing of the radial speed.

2. The radial speed control apparatus according to claim 1, wherein said radial speed control apparatus is in bearing structure.

3. The radial speed control apparatus according to claim 1, wherein said chamber is in circular form.

4. The radial speed control apparatus according to claim 1, wherein said first body element (2) is of a circular form having a first diameter value.

5. The radial speed control apparatus according to claim 1, wherein said first body (1) element is made of metal material.

6. The radial speed control apparatus according to claim 1, wherein said slot (1a) is semicircular or "U" in shape.

7. The radial speed control apparatus according to claim 1, wherein said slot (1a) is made of metal material.

8. The radial speed control apparatus according to claim 4, wherein said second body element (2) is of a circular form having a second diameter value less than the said first diameter value.

9. The radial speed control apparatus according to claim 1, wherein said second body element (2) is made of metal material.

10. The radial speed control apparatus according to claim 1, wherein said clutch element (3) is the form of tweezers.

11. The radial speed control apparatus according to claim 1, wherein said clutch element (3) is made of metal material.

12. The radial speed control apparatus according to claim 1, wherein said first braking element (4) is in a spherical form and / or ball structure.

13. The radial speed control apparatus according to claim 1, wherein said first braking element (4) is made of metal material.

14. The radial speed control apparatus according to claim 1, wherein the said radial speed control apparatus comprises at least one second braking element (5), preferably made of metal material, the said second braking element is positioned between the said clutch arms so that the said second body element (2) is located close to the center, and in the event of an increase in radial speed, it helps to move the said first braking element (4) away from the center of the said second body element (2), it helps to increase the value of the force component in the direction opposite to the direction of rotation by moving away from the center by the effect of centripetal/centrifugal force and to initiate the braking effect; it also helps to place the mentioned first braking element (4) in the mentioned slot (1a) when the radial speed reaches the mentioned first speed value, and to keep the radial speed constant at the mentioned first speed value by preventing the radial speed from increasing; the said second body element (2) has a configuration such that with the decreasing of radial speed, it moves closer to the center to reduce the braking effect, preferably between the said clutch arms, preferably to grip the said first braking element (4).

## Patentansprüche

1. Radial-Drehzahlregeleinrichtung, die keine externe Regelung und/oder kein externes Bremssystem erfordert, um die Radial-Drehzahl, die durch Drehbewegung erreicht wird, beizubehalten oder zu begrenzen, was sicherstellt, dass der Drehzahlwert beibehalten wird und konstant ist, wenn die Radial-Drehzahl einen ersten Drehzahlwert erreicht, und dass zwei verschiedene Elemente/Teile auf eine solche Weise miteinander verbunden sind, dass sie sich frei um eine erste Achse drehen können, **dadurch gekennzeichnet, dass** sie Folgendes umfasst:
- zumindest ein erstes Körperelement (1), das sich auf der Ebene senkrecht zu der ersten Achse erstreckt, das für die Platzierung der Elemente der Einrichtung darin geeignet ist, das zumindest eine Kammer enthält, die zum Verbinden der Elemente der Einrichtung geeignet ist und sich um die erste Achse dreht, welche die Elemente der Einrichtung stützt;
- zumindest einen Schlitz (1a), der sich von der entfernten Kante der Kammer von ihrer Mitte auf der Ebene senkrecht zu der ersten Achse erstreckt und sodass sie sich weg von der Mitte des ersten Körperelements (1) erstreckt, geeignet für die Platzierung eines kugelartigen Elements darin, was hilft, die Radial-Geschwindigkeit zu begrenzen, indem der Radial-Geschwindigkeit entgegengewirkt wird;
- zumindest ein zweites Körperelement (2), das sich an dem ersten Körperelement (1) befindet, sodass es dazu geeignet ist, sich frei um die erste Achse zu drehen, das Stütze für die Einrichtungselemente, die damit verbunden sind, bereitstellt;
- zumindest ein Kupplungselement (3), das sich in einer "V"-Form in Verbindung mit dem zweiten Körperelement (2) mit einer Erhöhung des Abstands dazwischen zu dem Schlitz (1a) erstreckt und das zumindest zwei Kupplungsarme beinhaltet, deren Enden nahe dem Schlitz (1a) sind, gekrümmt, sodass sie nahe zueinander kommen, wobei die Elemente der Einrichtung, die zwischen den Kupplungsarmen positioniert sind, während der Drehbewegung eingeschränkt sind und/oder Kraft in der entgegengesetzten Richtung zu der Bewegungsrichtung aufgebracht wird;
- zumindest ein erstes Bremselement (4), das wirkt, um den Abstand zwischen den Kupplungsarmen zu erhöhen, indem es sich weg von der Mitte des zweiten Körperelements (2) bewegt, falls sich die Radial-Drehzahl erhöht, um den Wert der Kraftkomponente in der entgegengesetzten Richtung zu der Drehrichtung zu erhöhen, indem es sich weg von der Mitte mit der Wirkung von zentripetaler/zentrifugaler Kraft bewegt, und um die Bremswirkung zu starten, um das Erhöhen der Radial-Drehzahl durch Eingreifen in den Schlitz (1a) zu verhindern, falls die Radial-Drehzahl den ersten Drehzahlwert erreicht, und das sicherstellt, dass die Radial-Drehzahl konstant gehalten wird und dass die Bremswirkung reduziert wird, indem es sich näher zu der Mitte des zweiten Körperelements (2) mit dem Verringern der Radial-Drehzahl bewegt.

2. Radial-Drehzahlregeleinrichtung nach Anspruch 1, wobei die Radial-Drehzahlregeleinrichtung in Lagerstruktur ist.

3. Radial-Drehzahlregeleinrichtung nach Anspruch 1, wobei die Kammer in kreisförmiger Form ist.

4. Radial-Drehzahlregeleinrichtung nach Anspruch 1, wobei das erste Körperelement (2) von einer kreisförmigen Form mit einem ersten Durchmesserwert ist.

5. Radial-Drehzahlregeleinrichtung nach Anspruch 1, wobei das erste Körperelement (1) aus Metallmaterial hergestellt ist.

6. Radial-Drehzahlregeleinrichtung nach Anspruch 1, wobei der Schlitz (1a) halbkreisförmig oder "U"-förmig ist.

7. Radial-Drehzahlregeleinrichtung nach Anspruch 1, wobei der Schlitz (1a) aus Metallmaterial hergestellt ist.

8. Radial-Drehzahlregeleinrichtung nach Anspruch 4, wobei das zweite Körperelement (2) von einer kreisförmigen Form mit einem zweiten Durchmesserwert kleiner als der erste Durchmesserwert ist.

9. Radial-Drehzahlregeleinrichtung nach Anspruch 1, wobei das zweite Körperelement (2) aus Metallmaterial hergestellt ist.

10. Radial-Drehzahlregeleinrichtung nach Anspruch 1, wobei das Kupplungselement (3) die Form einer Pinzette ist.

11. Radial-Drehzahlregeleinrichtung nach Anspruch 1,wobei das Kupplungselement (3) aus Metallmaterial hergestellt ist.

12. Radial-Drehzahlregeleinrichtung nach Anspruch 1, wobei das erste Bremselement (4) in einer kugelförmigen Form und/oder Kugelstruktur ist.

13. Radial-Drehzahlregeleinrichtung nach Anspruch 1, wobei das erste Bremselement (4) aus Metallmaterial hergestellt ist.

14. Radial-Drehzahlregeleinrichtung nach Anspruch 1, wobei die Radial-Drehzahlregeleinrichtung zumindest ein zweites Bremselement (5) umfasst, bevorzugt aus Metallmaterial hergestellt, wobei das zweite Bremselement zwischen den Kupplungsarmen positioniert ist, sodass sich das zweite Körperelement (2) nahe der Mitte befindet, und in dem Falle einer Erhöhung der Radial-Drehzahl es hilft, das erste Bremselement (4) weg von der Mitte des zweiten Körperelements (2) zu bewegen, es hilft, den Wert der Kraftkomponente in der Richtung entgegengesetzt zu der Drehrichtung zu erhöhen, indem es sich weg von der Mitte durch die Wirkung von zentripetaler/zentrifugaler Kraft bewegt, und die Bremswirkung zu initiieren; es auch hilft, das erwähnte erste Bremselement (4) in dem erwähnten Schlitz (1a) zu platzieren, wenn die Radial-Drehzahl den erwähnten ersten Drehzahlwert erreicht, und die Radial-Drehzahl konstant auf dem erwähnten ersten Drehzahlwert zu halten, indem verhindert wird, dass sich die Radial-Drehzahl erhöht; das zweite Körperelement (2) eine Konfiguration aufweist, sodass es sich mit dem Verringern der Radial-Drehzahl näher zu der Mitte bewegt, um die Bremswirkung zu reduzieren, bevorzugt zwischen den Kupplungsarmen, bevorzugt, um das erste Bremselement (4) zu greifen.

## Revendications

1. Appareil de commande de vitesse radiale qui ne nécessite pas de système de commande et/ou de freinage externe pour maintenir ou limiter la vitesse radiale obtenue par un mouvement de rotation, qui garantit que la valeur de vitesse est maintenue et constante lorsque la vitesse radiale atteint une première valeur de vitesse et que deux éléments/pièces différents sont raccordés l'un à l'autre de sorte qu'ils peuvent tourner librement autour d'un premier axe caractérisé en comprenant :
- au moins un premier élément de corps (1) qui s'étend sur le plan perpendiculaire au premier axe, qui est approprié pour le placement des éléments de l'appareil dans celui-ci, qui contient au moins une chambre, qui est appropriée pour relier les éléments de l'appareil et tourner autour du premier axe, qui supporte les éléments de l'appareil ;
- au moins une fente (1a) qui s'étend à partir du bord éloigné de ladite chambre à partir de son centre, sur le plan perpendiculaire au premier axe, et afin qu'elle s'étende au loin à partir du centre du premier élément corps (1), approprié pour la mise en place d'un élément de type bille dans celle-ci, ce qui contribue à limiter la vitesse radiale en contrecarrant la vitesse radiale ;
- au moins un second élément de corps (2), qui est situé sur le premier élément de corps (1) afin qu'il soit adapté pour tourner librement autour du premier axe, qui fournit un support pour les éléments d'appareil qui lui sont raccordés ;
- au moins un élément de couplage (3), qui s'étend en forme de « V » en liaison avec le second élément de corps (2) avec une augmentation de la distance entre eux vers la fente (1a) et qui comprend au moins deux bras de couplage dont les extrémités sont proches de la fente (1a) incurvées afin qu'elles se rapprochent l'une de l'autre, les éléments de l'appareil positionnés entre les bras de couplage sont restreints durant le mouvement de rotation et/ou une force est appliquée dans la direction opposée à la direction du mouvement ;
- au moins un premier élément de freinage (4) qui agit pour augmenter la distance entre les bras de couplage en s'éloignant du centre du second élément de corps (2) dans le cas où la vitesse radiale augmente, pour augmenter la valeur de la composante de force dans la direction opposée à la direction de rotation en s'éloignant du centre sous l'effet de la force centripète/centrifuge et pour démarrer l'effet de freinage, pour empêcher l'augmentation de la vitesse radiale en se mettant en prise dans la fente (1a) dans le cas où la vitesse radiale atteint la première valeur de vitesse et qui garantit que la vitesse radiale est maintenue constante et que l'effet de freinage est réduit en se rapprochant du centre du second élément de corps (2) avec la diminution de la vitesse radiale.

2. Appareil de commande de vitesse radiale selon la revendication 1, ledit appareil de commande de vitesse radiale étant dans une structure de palier.

3. Appareil de commande de vitesse radiale selon la revendication 1, ladite chambre étant de forme circulaire.

4. Appareil de commande de vitesse radiale selon la revendication 1, ledit premier élément de corps (2) étant d'une forme circulaire possédant une première valeur de diamètre.

5. Appareil de commande de vitesse radiale selon la revendication 1, ledit premier élément de corps (1) étant constitué de matériau métallique.

6. Appareil de commande de vitesse radiale selon la revendication 1, ladite fente (1a) étant de forme semi-circulaire ou en "U".

7. Appareil de commande de vitesse radiale selon la revendication 1, ladite fente (1a) étant constituée de matériau métallique.

8. Appareil de commande de vitesse radiale selon la revendication 4, ledit second élément de corps (2) étant d'une forme circulaire possédant une seconde valeur de diamètre inférieure à ladite première valeur de diamètre.

9. Appareil de commande de vitesse radiale selon la revendication 1, ledit second élément de corps (2) étant constitué de matériau métallique.

10. Appareil de commande de vitesse radiale selon la revendication 1, ledit élément de couplage (3) possédant la forme de pinces.

11. Appareil de commande de vitesse radiale selon la revendication 1,ledit élément de couplage (3) étant constitué de matériau métallique.

12. Appareil de commande de vitesse radiale selon la revendication 1, ledit premier élément de freinage (4) étant de forme sphérique et/ou de structure de bille.

13. Appareil de commande de vitesse radiale selon la revendication 1, ledit premier élément de freinage (4) étant constitué de matériau métallique.

14. Appareil de commande de vitesse radiale selon la revendication 1, ledit appareil de commande de vitesse radiale comprenant au moins un second élément de freinage (5), de préférence constitué de matériau métallique, ledit second élément de freinage étant positionné entre lesdits bras de couplage afin que ledit second élément de corps (2) soit situé à proximité du centre, et dans le cas d'une augmentation de la vitesse radiale, il aide à éloigner ledit premier élément de freinage (4) du centre dudit second élément de corps (2), il aide à augmenter la valeur de la composante de force dans le sens opposé au sens de rotation en s'éloignant du centre sous l'effet de la force centripète/centrifuge et à initier l'effet de freinage ; il aide également à placer le premier élément de freinage mentionné (4) dans la fente mentionnée (1a) lorsque la vitesse radiale atteint la première valeur de vitesse mentionnée, et à maintenir la vitesse radiale constante à la première valeur de vitesse mentionnée en empêchant la vitesse radiale d'augmenter ; ledit second élément de corps (2) possédant une configuration de sorte qu'avec la diminution de la vitesse radiale, il se rapproche du centre pour réduire l'effet de freinage, de préférence entre lesdits bras de couplage, de préférence pour saisir ledit premier élément de freinage (4).
